# EUROPÄISCHE PATENTSCHRIFT

(11) **EP 0 993 562 B1**
(45) Veröffentlichungstag und Bekanntmachung des Hinweises auf die Patenterteilung: **17.10.2001**
(21) Anmeldenummer: 98912282.5
(22) Anmeldetag: 20.02.1998
(51) Int. Cl.: F16D 27/00

(54) **STELLANTRIEB FÜR EINE FAHRZEUGKUPPLUNG**
VEHICLE CLUTCH CONTROL AND SETTING MECHANISM
MECANISME DE COMMANDE ET D'AJUSTAGE DE L'EMBRAYAGE D'UN VEHICULE

(30) Priorität: 05.07.1997 DE 19728828
(43) Veröffentlichungstag der Anmeldung: 19.04.2000
(73) Patentinhaber: ROBERT BOSCH GMBH, 70442 Stuttgart (DE)
(72) Erfinder: CAMPHAUSEN, Hanno, D-72461 Albstadt (DE); HESSDOERFER, Robert, D-97753 Karlstadt-Stetten (DE)
(86) Internationale Anmeldenummer: DE9800508
(87) Internationale Veröffentlichungsnummer: WO9902879

(56) Entgegenhaltungen:
- WO-A-95/35452
- FR-A- 2 541 793
- US-A- 4 440 035
- PATENT ABSTRACTS OF JAPAN vol. 012, no. 113 (M-683), 9.April 1988 & JP 62 242135 A (DIESEL KIKI CO LTD), 22.Oktober 1987,

## Beschreibung

### Stand der Technik

Die Erfindung betrifft einen Stellantrieb für eine Fahrzeugkupplung der im Oberbegriff des Anspruchs 1 definierten Gattung.

Bei einem bekannten Stellantrieb dieser Art (US-A-4 440 035) besteht das Getriebe aus einem Zahnradgetriebe und einem Spindeltrieb. Das Zahnradgetriebe hat ein auf der Welle eines Elektromotors angeordnetes durchmesserkleines Stirnzahnrad, welches mit einem durchmessergrößeren Stirnzahnrad kämmt. Letzeres ist mit einer Gewindespindel des Spindeltriebs gekuppelt. Eine auf der Gewindespindel undrehbar und axial verschieblich angeordnete Spindelmutter ist mit einem Ausgangsglied verbunden, welches einen Kraftspeicher aus einer Druckfeder mit linearer Kraft-Weg-Charakteristik trägt. Das eine begrenzte Übersetzung ins Langsame aufweisende Zahnradgetriebe baut relativ groß und hat eine geringe Zahnüberdeckung sowie einen niedrigen Wirkungsgrad. Außerdem wird der Kraftspeicher aufgrund seiner Charakteristik den Anforderungen für die Betätigung einer Fahrzeugkupplung nicht gerecht.

Aus FR-A-2 541 793 ist ein Stellantrieb für eine Kraftfahrzeugkupplung bekannt, bei der eine Drehbewegung eines Elektromotors über ein mehrstufiges Getriebe, nämlich einen Schneckentrieb, einen Zahnstangentrieb und einen Hebeltrieb, in eine nicht lineare Bewegung eines hebelseitigen Ausgangsglieds gewandelt wird. Da letzteres unmittelbar an der Kupplung angreift und dabei eine kreisbogenförmige Bewegungsbahn ausführt, ergeben sich ungünstige Angriffsverhältnisse am Ausrücklager der Kraftfahrzeugkupplung. Außerdem baut der Stellantrieb insbesondere wegen des Hebeltriebs relativ groß. Ferner ist der Stellantrieb mit einem Kraftspeicher versehen, der mit einer Zugfeder über einen einarmigen Hebel und einen Zahnstangentrieb in aufwendiger Weise mit dem Hebeltrieb gekoppelt ist.

Bei einem aus WO-A-95/35 452 bekannten Stellantrieb für eine Kraftfahrzeugkupplung ist das Getriebe als Spindeltrieb mit Gewindespindel und darauf verschraubbarer Spindelmutter ausgebildet, wobei die Gewindespindel drehfest mit der Welle eines Elektromotors verbunden ist und die Spindelmutter einen Arbeitskolben bildet, der in einem hydraulischen Arbeitszylinder geführt ist. Der Arbeitszylinder ist über eine Hydraulikleitung mit einem auf einen Kupplungshebel wirkenden hydraulischen Stellzylinder verbunden. Mit Drehen des Elektromotors schraubt sich die Spindelmutter auf der Gewindespindel entlang, so daß sich der Arbeitskolben je nach Drehrichtung der Gewindespindel in die eine oder andere Richtung verschiebt. Zum Zustellen des Arbeitskolbens wird Hydrauliköl aus dem Arbeitszylinder in den Stellzylinder gepreßt und durch diesen die Kupplung gegen die Kraft einer Kupplungsfeder ausgerückt. Das Zustellen des Arbeitskolbens wird unterstützt durch eine als Druckfeder ausgebildete Kompensationsfeder, die sich zwischen dem Arbeitskolben, also der Spindelmutter, und einem den Elektromotor aufnehmenden Gehäuse abstützt, so daß der Elektromotor nur einen Teil der zum Ausrücken der Kupplung erforderlichen Antriebskraft aufbringen muß. Die Charakteristik der Kompensationsfeder ist mittels eines aufwendigen Getriebes veränderbar, welches von der Spindelmutter während des Kupplungsbetätigungsvorganges angetrieben wird und auf ein Widerlager der Feder einwirkt. Beim Einrücken der Kupplung treibt die Kupplungseinrückfeder den Arbeitskolben in Gegenrichtung an, wobei sie ihrerseits die Kompensationsfeder spannen hilft, so daß von dem Elektromotor auch hier nur ein geringer Teil der erforderlichen Spannkraft aufgebracht werden muß.

### Vorteile der Erfindung

Der erfindungsgemäße Stellantrieb mit den kennzeichnenden Merkmalen des Anspruchs 1 hat folgende Vorteile:

Durch die Ausbildung des Zahnradgetriebes als Hohlradgetriebe wird eine relativ schlanke Bauform des Stellantriebs erzielt und zudem ein guter Wirkungsgrad erhalten. Durch die sehr gute Zahnüberdeckung zwischen der Innenverzahnung des Hohlrads und der Stirnverzahnung des Stirnrads ist der Stellantrieb relativ robust und besitzt eine hohe Lebensdauer. Außerdem erhält die über das Kompensationsrad auf das Ausgangsglied wirkende Kompensationskraft des Kraftspeichers eine nicht lineare Charakteristik, die durch die Übersetzung des Kompensationsrads und somit über den Drehwinkel des Kompensationsrad beeinflußt werden kann. Damit ist es möglich, die Kompensationskraft optimal der nicht linearen Charakteristik der meist als Tellerfeder ausgeführten Kupplungseinrückfeder anzupassen und somit das zusätzlich erforderliche Antriebsmoment für das Ausgangsglied zum Ausrücken der Kupplung über den gesamten Kupplungsweg niedrig zu halten.

Durch die in den weiteren Ansprüchen aufgeführten Maßnahmen sind vorteilhafte Weiterbildungen und Verbesserungen des im Anspruch 1 angegebenen Stellantriebs möglich.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt eines Stellantriebs für eine Fahrzeugkupplung, schematisch dargestellt,
- Fig. 2: einen Schnitt längs der Linie II-II in Fig. 1,
- Fig. 3: eine schematische Darstellung einer von dem Stellantrieb gemäß Fig. 1 und 2 betätigten Fahrzeugkupplung.

### Beschreibung des Ausführungsbeispiels

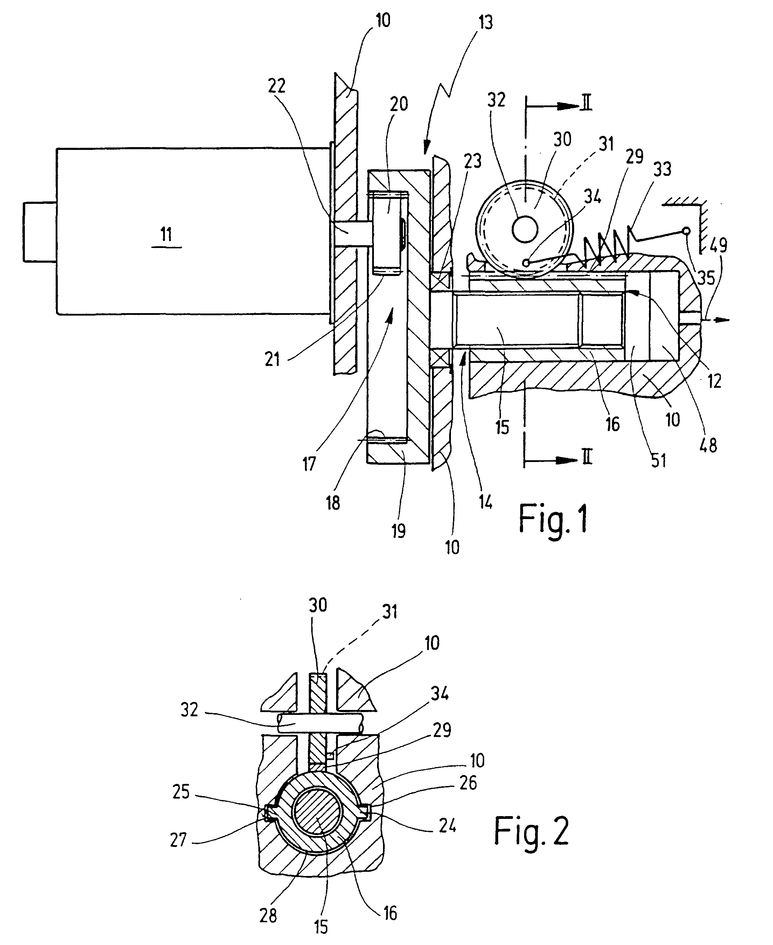

Der in Fig. 1 ausschnittweise im Längsschnitt zu sehende Stellantrieb für eine Fahrzeugkupplung weist ein Gehäuse 10 auf, an dem ein Elektromotor 11 angeflanscht ist und in dem ein Ausgangsglied 12 zum mittel- oder unmittelbaren Ausrücken der Fahrzeugkupplung axial verschieblich geführt ist. Zwischen dem Elektromotor 11 und dem Ausgangsglied 12 ist ein Getriebe 13 angeordnet, das eine rotatorische Eingangsbewegung in eine translatorische Bewegung des Ausgangsglieds 12 umsetzt. Das Ausgangsglied 12 wirkt in bekannter Weise auf einen Kupplungshebel einer Fahrzeugkupplung, die durch die Kraft einer Kupplungseinrückfeder in ihrer Einrückstellung gehalten wird. Dabei kann das Ausgangsglied 12 den Kupplungshebel direkt oder über ein mechanisches oder hydraulisches Übertragungsglied beaufschlagen.

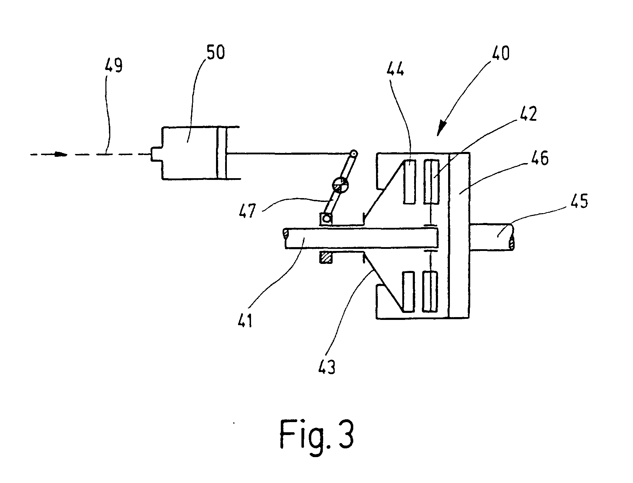

In Fig. 3 ist ein Beispiel einer bekannten und beispielsweise in der DE 43 20 204 A1 beschriebenen Fahrzeugkupplung schematisch dargestellt. Die als Reibungskupplung 40 konzipierte Fahrzeugkupplung weist eine mit einer Getriebeeingangswelle 41 drehfest verbundene Kupplungsscheibe 42, die von der hier als Membranfeder ausgebildeten Kupplungseinrückfeder 43 reibschlüssig zwischen einer Anpreßplatte 44 und einer mit einer Kurbelwelle 45 der Brennkraftmaschine des Fahrzeugs verbundenen Gegenanpreßplatte 46 in Form eines Schwungrads einspannbar ist. Die Reibungskupplung 40 ist mittels eines vom Stellantrieb, und zwar von dessen Ausgangsglied 12, betätigten Ausrückers oder Kupplungshebels 47 gegen die Kraft der Kupplungseinrückfeder 43 auskuppelbar. Zwischen Ausgangsglied 12 und Kupplungshebel 47 ist ein hydraulisches Übertragungsglied angeordnet, das einen Geberzylinder 48 (Fig. 1), eine Hydraulikleitung 49 (Fig. 1 und 2) und einen auf den Kupplungshebel 47 wirkenden Nehmerzylinder 50 umfaßt. Ein im Nehmerzylinder 50 verschieblich geführter Stellkolben 51 ist an der Stirnseite des Ausgangsglieds 12 befestigt. Verschiebt sich das Ausgangsglied 12 und damit der Stellkolben 12 in Fig. 1 nach rechts, so wird im hydraulischen Übertragungsglied ein Hydraulikdruck aufgebaut, als dessen Folge der Kupplungshebel 47 verschwenkt und die Reibungskupplung 40 gegen die Kraft der Kupplungseinrückfeder 43 ausgekuppelt wird. Fig. 3 zeigt die Reibungskupplung 40 in Auskuppelstellung. Fig. 1 die Stellung des Ausgangsglieds 12 mit dem Stellkolben 51 bei eingerückter Reibungskupplung 40.

Das Getriebe 13 umfaßt einen Spindeltrieb 14 mit Gewindespindel 15 und darauf verschraubbarer Spindelmutter 16, sowie ein Hohlradgetriebe 17 mit einem eine Innenverzahnung 18 aufweisenden Hohlrad 19 und einem Stirnrad 20, das sich mit seiner Stirnverzahnung 21 in der Innenverzahnung 18 des Hohlrads 19 abrollt. Das Stirnrad 20 sitzt drehfest auf einer Abtriebswelle 22 des Elektromotors 11, und das Hohlrad 19 ist drehfest mit der Gewindespindel 15 verbunden, die mittels eines Radiallagers 23 im Gehäuse 10 drehbar gelagert und axial unverschieblich gehalten ist. Die auf der Gewindespindel 15 verschraubbare Spindelmutter 16 trägt zwei diametral angeordnete, radial vorstehende Gleitnasen 24,25 (Fig. 2), die mit Führungsspiel in je eine im Gehäuse 10 ausgebildete Führungsnut 26 bzw. 27 hineinragen. Diese Führungsnuten 26,27 sind in die Innenwand einer Bohrung 28 im Gehäuse 10 eingebracht, in welcher die Spindelmutter 16 aufgenommen ist, die das Ausgangsglied 12 des Stellantriebs bildet.

Die hohlzylinderförmige Spindelmutter 16 trägt auf ihrer Außenseite eine Zahnstange 29, die achsparallel ausgerichtet ist. In die Zahnstange 29 greift die Stirnverzahnung 31 eines Kompensationsrads 30 ein, das mit seiner Drehachse 32 im Gehäuse 10 drehend gelagert ist. Am Kompensationsrad 30 greift ein als Zugfeder 33 ausgebildeter Kraftspeicher an. Der Angriffspunkt 34 der Zugfeder 33 liegt dabei im radialen Abstand von der Drehachse 32 des Kompensationsrads 30. Das Widerlager 35 der Zugfeder 33 ist im Gehäuse 10 ausgebildet. In Kupplungseinrückstellung ist die Zugfeder 33 gespannt und wird durch die Selbsthemmung des Spindeltriebs 14 in ihrer Spannstellung gehalten.

Zum Ausrücken der Kupplung wird der Elektromotor 11 eingeschaltet, wodurch seine Abtriebswelle 22 über das Hohlradgetriebe 17 die Gewindespindel 15 des Spindeltriebs 14 in Drehung versetzt. Die das Ausgangsglied 12 des Stellantriebs bildende Spindelmutter 16 wird durch die drehende Gewindespindel 15 in Längsrichtung, in Fig. 1 nach rechts, verschoben und wirkt auf den Kupplungshebel der Kupplung gegen die Kraft der Kupplungseinrückfeder. Gleichzeitig wird von der Zugfeder 33 ein Drehmoment am Kompensationsrad 30 erzeugt, das über die Stirnverzahnung 31 des Kompensationsrads 30 und die Zahnstange 29 an der Spindelmutter 16 in eine auf die Spindelmutter 16 wirkende Antriebskraft umgesetzt wird, die in die gleiche Verschieberichtung der Spindelmutter 16, in Fig. 1 nach rechts, wirkt. Durch Wahl der Übersetzung zwischen Zahnstange 29 und Kompensationsrad 30 sowie die Lage des Angriffspunktes 34 der Zugfeder 33 am Kompensationsrad 30 kann die Charakteristik dieser auf die Spindelmutter 16 wirkenden Kompensationskraft in Abhängigkeit von dem Verschiebeweg der Spindelmutter 16 so eingestellt werden, daß die Kompensationskraft an jeder Stelle des Verschiebewegs der Spindelmutter 16 der auf die Spindelmutter 16 in Gegenrichtung wirkenden Kraft der Kupplungseinrückfeder entspricht. Damit wird über den gesamten Stellweg des Stellantriebs die Federkraft der Kupplungseinrückfeder kompensiert, so daß der Elektromotor 11 ein nur kleines, konstantes Drehmoment zur Verschiebung der Spindelmutter 16 bzw. des Ausgangsglieds 12 aufbringen muß.

Zum Wiedereinrücken der Kupplung wird der Elektromotor 11 umgepolt, so daß er gegensinnig läuft und durch die inverse Rotation der Gewindespindel 15 die Spindelmutter 16 sich in Fig. 1 nach links verschiebt. Das mit der Zahnstange 29 kämmende Kompensationsrad 30 wird in umgekehrte Richtung gedreht und spannt seinerseits die Zugfeder 33. Diese Rückwärtsbewegung der Spindelmutter 16 wird unterstützt durch die Federkraft der Kupplungseinrückfeder, die weitgehend die zum Spannen der Zugfeder 33 erforderliche Antriebskraft aufbringt, so daß auch hier von dem Elektromotor 11 nur eine kleine Leistung abgefordert wird.

Anstelle der Zugfeder 33 kann auch eine Druckfeder als Kraftspeicher eingesetzt werden. Der Angriffspunkt der Druckfeder am Kompensationsrad 30 ist dann diametral zum Angriffspunkt 34 in Fig. 1 anzuordnen.

## Patentansprüche

1. Stellantrieb für eine Fahrzeugkupplung mit einem axial verschieblich geführten Ausgangsglied (12) zum mittel- oder unmittelbaren Ausrücken der Fahrzeugkupplung,
- mit einem eine rotatorische Eingangsbewegung in eine translatorische Bewegung des Ausgangsglieds (12) umsetzenden Getriebe (13), welches aus einem Zahnradgetriebe (17) und einem Spindeltrieb (14) besteht, wobei das Zahnradgetriebe (17) ein elektromotorisch angetriebenes Stirnrad (20) und ein mit diesem kämmendes Zahnrad (19) und der Spindeltrieb (14) eine von dem Zahnrad (19) angetriebene Gewindespindel (15) und eine auf der Gewindespindel (15) verschraubbare Spindelmutter (16) aufweisen, welche undrehbar und axial verschieblich geführt ist,
- und mit einem Kraftspeicher (33) in Form einer Feder zur Erzeugung einer in Richtung Kupplungausrücken auf das Ausgangsglied (12) wirkenden Zusatzkraft,
**dadurch gekennzeichnet**,
- **daß** das Zahnrad (19) des Zahnradgetriebes (17) ein Hohlrad mit einer Innenverzahnung (18) ist, in der sich das Stirnrad (20) abrollt,
- und **daß** die Spindelmutter (16) eine sich zu deren Achse parallel erstreckende Zahnstange (29) trägt, mit der ein um eine Drehachse (32) drehendes Kompensationsrad (30) mit einer Stirnverzahnung (31) kämmt, an dem die Feder im Radialabstand zu dessen Drehachse (32) angreift.

2. Stellantrieb nach Anspruch 1, **dadurch gekennzeichnet, daß** die Translationsbewegung des Ausgangsglieds (12) und die Drehbewegung des Kompensationsrads (30) zwangsgekoppelt sind.

3. Stellantrieb nach Anspruch 1, **dadurch gekennzeichnet, daß** der Kraftspeicher von einer Druck- oder Zugfeder (33) gebildet ist, deren Widerlager (35) in einem das Getriebe (13) aufnehmenden Gehäuse (10) ausgebildet ist.

4. Stellantrieb nach Anspruch 1, **dadurch gekennzeichnet, daß** die Spindelmutter (16) mit dem Ausgangsglied (12) verbunden ist oder dieses selbst bildet.

5. Stellantrieb nach Anspruch 1, **dadurch gekennzeichnet, daß** die Spindelmutter (16) mit mindestens einer radial abstehenden Gleitnase (24, 25) in mindestens eine in dem Gehäuse (10) ausgebildeten Führungsnut (26, 27) mit Führungsspiel eingreift und daß die Gewindespindel (15) im Gehäuse (10) drehend gelagert und axial unverschieblich abgestützt ist.

6. Stellantrieb nach Anspruch 1, **dadurch gekennzeichnet, daß** das Hohlrad (19) mit der Gewindespindel (15) und das Stirnrad (20) mit einer Abtriebswelle (22) eines Elektromotors (11) jeweils drehfest verbunden sind.

## Claims

1. Actuator for a vehicle clutch with an output member (12), which is guided in an axially displaceable manner, for the direct or indirect disengagement of the vehicle clutch,
- with a mechanism (13) that converts a rotary input motion into a translational motion of the output member (12) and comprises a gear mechanism (17) and a spindle drive (14), the gear mechanism (17) having a cylindrical gear (20), which is driven by electric motor, and a gearwheel (19) that meshes with the said gear, and the spindle drive (14) having a threaded spindle (15), which is driven by the gearwheel (19), and a spindle nut (16), which can be screwed on the threaded spindle (15) and is guided in a nonrotatable and axially displaceable manner,
- and with an energy storage device (33) in the form of a spring for the purpose of producing an additional force that acts on the output member (12) in the direction of clutch disengagement,
**characterized**
- **in that** the gearwheel (19) of the gear mechanism (17) is an internal gear with internal toothing (18) in which the cylindrical gear (20) rolls,
- and **in that** the spindle nut (16) carries a rack (29), which extends parallel to the axis of the spindle nut and with which there meshes a compensating gear (30) with cylindrical gear toothing (31) that rotates about an axis (32) of rotation and on which the spring engages at a radial distance from its axis (32) of rotation.

2. Actuator according to Claim 1, **characterized in that** the translational motion of the output member (12) and the rotary motion of the compensating gear (30) are forcibly coupled.

3. Actuator according to Claim 1, **characterized in that** the energy storage device is formed by a compression or tension spring (33), the abutment (35) of which is formed in a housing (10) that accommodates the mechanism (13).

4. Actuator according to Claim 1, **characterized in that** the spindle nut (16) is connected to the output member (12) or forms the latter itself.

5. Actuator according to Claim 1, **characterized in that** the spindle nut (16) engages with guiding play, by means of at least one radially protruding sliding projection (24, 25), in at least one guide slot (26, 27) formed in the housing (10), and **in that** the threaded spindle (15) is mounted in a rotary manner and supported in a manner that does not allow axial displacement in the housing (10).

6. Actuator according to Claim 1, **characterized in that** the internal gear (19) is connected rotationally to the threaded spindle (15), and the cylindrical gear (20) is connected rotationally to an output shaft (22) of an electric motor (11).

## Revendications

1. Mécanisme de commande et d'ajustage de l'embrayage d'un véhicule comportant un organe de sortie (12) coulissant axialement pour assurer directement ou indirectement le débrayage, dans lequel
• un mouvement rotatif d'entrée est transformé en un mouvement de translation de l'organe de sortie (12) par une transmission (13) composée d'un engrenage à pignons (17) et d'un mécanisme à broche (14), l'engrenage à pignons (17) comprenant un pignon droit (20) entraîné par un moteur électrique et engrené avec une roue dentée (19), et le mécanisme à broche (14) comprenant une broche filetée (15) entraînée par la roue dentée (19) et un écrou de broche (16) pouvant se visser sur la broche (15) et guidé sensiblement axialement, sans pouvoir tourner,
• un accumulateur d'énergie (33), ayant la forme d'un ressort, produit une force additionnelle agissant sur l'organe de sortie (12) dans le sens du débrayage,
**caractérisé en ce que**
• la roue dentée (19) de l'engrenage à pignons (17) est une roue creuse portant une denture interne (18) circulant sur le pignon droit (20), et
• l'écrou de broche (16) porte, parallèlement à son axe, une crémaillère (29) avec laquelle engrène la denture droite (31) d'une roue de compensation (30) tournant autour d'un axe de rotation (32) et avec laquelle est en prise le ressort, en un point situé à une certaine distance de cet axe (32).

2. Mécanisme selon la revendication 1,
**caractérisé en ce que**
le mouvement de translation de l'organe de sortie (12) et le mouvement de rotation de la roue de compensation (30) sont accouplés.

3. Mécanisme selon la revendication 1,
**caractérisé en ce que**
l'accumulateur d'énergie est constitué par un ressort de poussée ou de traction (33) dont le contre palier (35) se trouve dans un boîtier (10) où est logée la transmission (13).

4. Mécanisme selon la revendication 1,
**caractérisé en ce que**
l'écrou de broche (16) est relié à l'organe de sortie (12) ou est lui-même cet organe.

5. Mécanisme selon la revendication 1,
**caractérisé en ce que**
l'écrou de broche (16) porte en saillie au moins un ergot (24, 25) pénétrant avec du jeu dans au moins une rainure de guidage (26, 27) creusée dans le boîtier (10), et la broche filetée (15) est montée en rotation dans le boîtier (10), mais ne peut coulisser axialement.

6. Mécanisme selon la revendication 1,
**caractérisé en ce que**
la roue creuse (19), la broche filetée (15) et le pignon droit (20) sont solidaires en rotation de l'arbre de sortie (22) d'un moteur électrique (11).
